# EUROPÄISCHE PATENTSCHRIFT

(11) **EP 0 590 170 B1**
(45) Veröffentlichungstag und Bekanntmachung des Hinweises auf die Patenterteilung: **03.07.1996**
(21) Anmeldenummer: 92116462.0
(22) Anmeldetag: 25.09.1992
(51) Int. Cl.: B60Q 3/04, F21Q 3/00, B60H 1/00

(54) **Anzeigevorrichtung, insbesondere Frontblende eines Kraftfahrzeug-Bediengerätes**
Display device, in particular front plate of a control device in a vehicle
Dispositif d'affichage, notamment face avant d'un appareil de commande dans un véhicule automobile

(43) Veröffentlichungstag der Anmeldung: 06.04.1994
(73) Patentinhaber: Valeo Klimasysteme GmbH, 96476 Rodach (DE)
(72) Erfinder: Jupe, Peter, W-8630 Coburg (DE); Hlousek, Klaus-Peter, W-8630 Coburg (DE)
(74) Vertreter: COHAUSZ HASE DAWIDOWICZ & PARTNER

(56) Entgegenhaltungen:
- EP-A- 0 355 482
- DE-A- 2 741 492
- FR-A- 2 088 625
- US-A- 1 571 879

## Beschreibung

Die Erfindung bezieht sich auf eine Anzeigevorrichtung, insbesondere Frontblende eines Kraftfahrzeug-Bediengerätes gemäß Anspruch 1.

Armaturenbrettseitige Frontblenden von Kraftfahrzeug-Bediengeräten weisen eine Vielzahl von Anzeigevorrichtungen in Form von in bestimmtem Nachtdesign verschiedenfarbig beleuchteten Symbolflächen auf. Derartige Symbolflächen können z.B. konturierte Schwertkeile bzw. Zahlenfolgen im Umfeld eines Einstellmittels in Form eines Schiebereglers, bzw. eines Drehknopfes oder Stellungsmarkierungen in einem solchen Schieberegler bzw. Drehknopf selbst darstellen. Insbesondere zur Stellungsmarkierung in Schiebereglern bzw. Drehknöpfen werden prismaartige Lichtleiter benutzt DE-A-2 741 492 zeigt beispielsweise eine Anzeigeeinrichtung, bei der in die Einstellmittel Lichtleiter eingebaut sind, die bei der Herstellung von der Sichtseite des Einstellmittels her in eine Einstecköffnung derart eingesteckt werden, daß sie einerseits mit einer scharf konturierten Anzeigefläche, vorzugsweise randseitig bündig, zur übrigen lichtundurchlässigen Frontfläche des Bedienelementes angeordnet sind, mit einem Lichtaufnahmesteg in das Innere des Bediengerätes ragen und von einer dort angeordneten, auch gegebenenfalls zur Speisung weiterer Lichtleiter vorgesehenen, Lichtquelle angestrahlt werden.

Aufgrund der als Massen-Serienartikel gefertigten, vorzugsweise aus Kuststoff gespritzten, Frontblenden und Einstellelementen bzw. Lichtleitern gegebenen Toleranzen besteht die Gefahr, daß im Bereich der Sichtseite durch Spalte zwischen dem Lichtleiter einerseits und den umgebenen Wand flächen der Einstecköffnung andererseits ein Streulichtfeld entsteht, das sowohl eine scharfe Konturierung der frontseitigen Anzeigefläche verwischt als auch bei abweichender Lichtfarbe eine eindeutige Farberkennung erschwert. Zur Verhinderung dieser Nachteile ist es bekannt, den Lichtleiter an seinen von der Einstecköffnung umgebenen, zur anzeigenden Frontfläche üblicherweise in rechtem Winkel angrenzenden Seitenflächen in besonderen Arbeitsvorgängen mit einem lichtundurchlässigen Farbauftrag, insbesondere durch Lackieren oder Heißprägen, gegen einen unerwünschten Lichtaustritt abzublenden.

Aus FR-A-2 088 625 ist eine Anzeigevorrichtung mit einem einsteckbaren Lichtleiter bekannt, der über einen Lichtaufnahmesteg von einer Lichtquelle versorgt wird und dessen an die Frontfläche angrenzenden Seitenflächen gegenüber der Frontfläche in spitzem Winkel aufeinanderzu gerichtet sind. Die Frontfläche des Lichtleiters ist eben und senkrecht zur Leiterachse. Die schrägen Seitenflächen dienen lediglich der Zentrierung des Lichtleiters. Dieses Dokument bildet den Oberbegriff des Anspruchs 1.

Aufgabe der Erfindung ist es, Lichtleitelemente derart zu modifizieren, daß sie bei einfacher Montage so an die Frontfläche eines Bedienknopfes angepaßt werden können, daß es nicht zum Austritt von Streulicht kommt.

Die Lösung dieser Aufgabe gelingt durch die Lehre des Anspruches 1; vorteilhafte Ausgestaltungen der Erfindung sind jeweils Gegenstand der Unteransprüche.

Durch die erfindungsgemäße Abschrägung der im Bereich der Einstecköffnung entsprechend gespritzten seitlichen Flächen des Lichtleiters werden die dort austretenden Streulicht-Strahlen entweder gegen lichtschluckende dunkle Deckelteile bzw. in das Innere des Gehäuses des Bediengerätes und somit von der Frontfläche des Lichtleiters weggerichtet; dadurch kann in vorteilhafter Weise auf einen abdeckenden Farbauftrag auf die Seitenflächen des vorzugsweise aus einem lichtleitenden farblosen oder in bestimmter Signalfarbe eingefärbten Kunststoff gespritzten Lichtleiters verzichtet werden. Falls eine bestimmte Signalfarbe für die Frontfläche des Lichtleiters gewünscht ist, kann dies außer durch eine totale Einfärbung des Kunststoffes des gesamten Lichtleiters auch durch einen entsprechenden lichtdurchlässigen Farbauftrag, insbesondere durch Heißprägen, auf die Frontfläche des Lichtleiters erfolgen.

Die Erfindung sowie weitere vorteilhafte Ausgestaltungen der Erfindung gemäß Gegenständen der Unteransprüche werden im folgenden anhand eines schematisch dargestellten Ausführungsbeispiels in der Zeichnung näher erläutert; darin zeigen:
- Fig. 1: die Draufsicht auf ein Bediengerät mit drei Bedienknöpfen mit jeweils einer Stellungs-Markierung durch einen eingesetzten Lichtleiter
- Fig. 2: in vergrößerter Darstellung einen Schnitt durch die Anordnung gemäß Fig. 1 im Schnittverlauf II-II
- Fig. 3: in weiterer Ausschnittvergrößerung den in Fig. 2 eingesteckten Lichtleiter
- Fig. 4: in weiterer Ausschnittvergrößerung den Lichtleiter gemäß Fig. 3 im Schnittverlauf IV-IV.

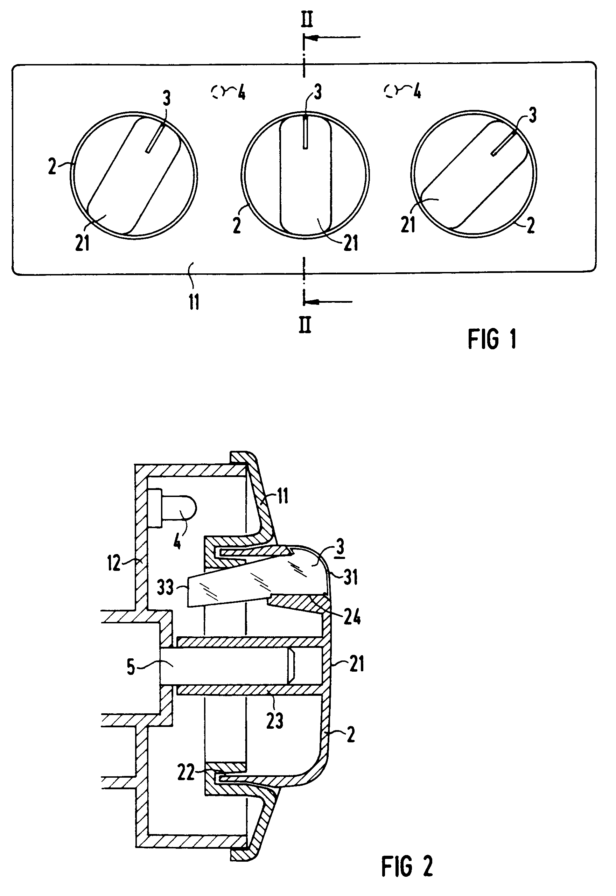

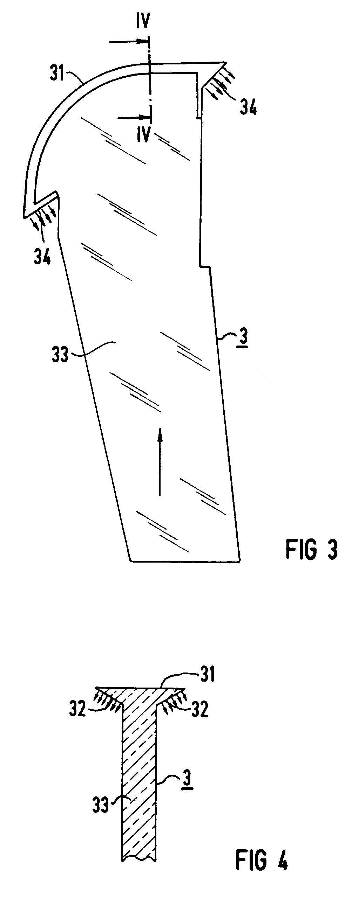

Fig. 1, 2 zeigen in Draufsicht bzw. Schnittdarstellung ein Kraftfahrzeug-Bediengerät mit einem armaturenbrettseitigen Deckel 11 und einem rückseitigen Gehäuse 12. Vor dem Deckel 11 sind drei Bedienknöpfe 2 durch Aufstecken einer Achsaufnahme 23 auf einem im Gehäuse 12 gehaltenen Achsstift 5 drehbar gelagert. Zur Anzeige der jeweiligen Drehstellung der Bedienknöpfe 2 ist in die Frontfläche 21 eines Betätigungsknebels jeweils von der Sichtseite her je ein Lichtleiter 3 eingesteckt, dessen Bauform aus Fig.2 und insbesondere Fig. 3, 4 ersichtlich ist. Den Lichtleitern 3 und damit der jeweiligen Stellungsmarkierung der Bedienknöpfe 2 sind - in der schematischen Darstellung gemäß Fig. 1 nicht eingetragene - Symbolflächen, z. B. Schwertkeile oder Stufennummerierungen, auf dem ansonsten lichtundurchlässigen Deckel 11 des Bediengerätes 1 zugeordnet.

Zur beleuchteten Anzeige der Stellungsmarkierungen der Bedienknöpfe 2 sind im Innern des Gehäuses 12 zwei Lichtquellen 4 derart angeordnet, daß von einem an die Frontfläche 31 des Lichtleiters 3 einstückig angeformten, in das Innere des Gehäuses 12 ragenden Lichtaufnahmesteg 33 eine hinreichende Lichtmenge zur Beleuchtung der Frontfläche 31 eingefangen werden kann.

Zur genauen Konturierung der Frontfläche 31 des Lichtleiters 3 ist zunächst eine Abblendung des Deckels 11 und der übrigen Frontfläche des Bedienknopfes 2 durch entsprechende Einfärbung des Kunststoffes oder durch einen dunklen, lichtundurchlässigen Farbauftrag sowie durch Einfassung der gehäuseseitigen Innenwand 22 des Bedienknopfes 2 in Form einer Lichtfalle gesorgt.

Erfindungsgemäß sind darüberhinaus - wie inbesondere aus Fig. 3, 4 ersichtlich - die an die Frontfläche 31 des einstückig gespritzten Lichtleiters 3 angrenzenden Seitenflächen 32,34 im Bereich der Lichtleiter 3 aufnehmenden Einstecköffnung 24 des Bedienknopfes 2 in Abkehr von der bisher rechtwinkligen Anbindung an die Frontfläche 31 derart in spitzem Winkel abgewinkelt, daß der Lichtaustritt aus den Seitenflächen 32, 34 von der Frontfläche 21 weggerichtet ist und somit auf eine gesonderte Abblendung durch einen zusätzlichen dunklen, lichtundurchlässigen Farbauftrag auf die Seitenflächen 32, 34 auf die Seiten verzichtet werden kann. Eventuelle, durch Fertigungstoleranzen bedingte, von der Sichtseite der Anzeigeflächen einsehbare Spalte sind somit nicht mit Streulicht gefüllt. Vorzugsweise liegt der Lichtleiter 3 mit seinem stabförmigen, der gekrümmten Oberfläche des Bedienknopfes 2 angepaßten, in Längsrich tung gekrümmten Frontfläche 31 nur mit seinen schmalen Seitenflächen 34 an eine entsprechende Ausnehmungseinformung der Einstecköffnung 24 an. Die langen Seitenflächen 32 werden in engem freien Abstand von einem stufenförmigen Absatz der Einstecköffnung 24 labyrinthartig in an sich bekannter Weise untergriffen, so daß kein direkter Lichtdurchtritt vom Innenraum des Gehäuses 12 seitlich an dem Lichtleiter 3 vorbei zur Sichtseite des Bediengerätes 1 erfolgen kann.

## Patentansprüche

1. Anzeigevorrichtung, insbesondere in der Frontblende eines Kraftfahrzeug-Bediengerätes (1), mit einem in eine korrespondierende Einstecköffnung (24) einer ansonsten lichtundurchlässigen Vorderfläche (21) eines Bedienknopfes (2) eingesteckten stabförmigen Lichtleiter (3), wobei von der Einstecköffnung (24) umgebene, an eine Frontfläche (31) angrenzende Seitenflächen (32,34) des Lichtleiters gegenüber der Frontflache (31) in spitzem Winkel angeordnet sind und wobei die Öffnungen der spitzen Winkel im Sinne eines von der Frontfläche (31) weggerichteten Seitenlicht-Austrittes aufeinanderzu gerichtet sind und wobei der Lichtleiter (3) mit einem Lichtaufnahmesteg (33) in den zumindest mit einer Lichtquelle versehenen Innenraum des Bediengerätes (1) ragt,
**dadurch gekennzeichnet,** daß der Lichtleiter (3) eine entsprechend der Vorderfläche (21) des Bedienknopfes gekrümmte Frontfläche (31) aufweist und daß die an die Frontfläche (31) angrenzenden schmalen Seitenflächen (34) in der Einstecköffnung (24) auf entsprechenden Absätzen aufliegen.

2. Anzeigevorrichtung nach Anspruch 1,
**dadurch gekennzeichnet,** daß die Absätze die Seitenflächen (34) des Lichtleiters (3) hintergreifen.

3. Anzeigevorrichtung nach Anspruch 1 oder 2,
**dadurch gekennzeichnet,** daß die Frontfläche (31) des Lichtleiters (3) mit einem lichtdurchlässigen Farbauftrag, insbesondere durch Heißprägen, versehen ist.

4. Anzeigevorrichtung nach einem der vorherigen Ansprüche, **dadurch gekennzeichnet,** daß die Frontfläche (31) des Lichtleiters (3) zumindest randseitig im Bereich der Einstecköffnung (24) bündig zu der lichtundurchlässigen Vorderfläche angeordnet ist.

5. Anzeigevorrichtung nach einem der vorherigen Ansprüche, **dadurch gekennzeichnet,** daß die Seitenflächen (32,34) des Lichtleiters (3) hinsichtlich eines lichtdurchlässigen Farbauftrages unbearbeitet sind.

## Claims

1. A display device, in particular in the front panel of a motor vehicle control device (1), having a rod-shaped light guide (3) inserted into a corresponding insertion opening (24) of an otherwise opaque front face (21) of a control knob (2), whereby lateral faces (32, 34) of the light guide, which are surrounded by the insertion opening (24) and are adjacent to a front face (31), are disposed at an acute angle in relation to the front face (31) and whereby the openings of the acute angles are directed towards one another in accordance with a lateral emergence of light directed away from the front face (31) and whereby the light guide (3) extends with a light-collecting rod (33) into the interior of the control device (1) provided at least with one light source, **characterised in that** the light guide (3) comprises a front face (31) curved to correspond to the front face (21) of the control knob,
**and in that** the narrow lateral faces (34) adjacent to the front face (31) lie on corresponding shoulders in the insertion opening (24).

2. A display device according to Claim 1,
**characterised in that** the shoulders engage behind the lateral faces (34) of the light guide (3).

3. A display device according to Claim 1 or 2,
**characterised in that** the front face (31) of the light guide (3) is provided with an opaque colour application, in particular by hot stamping.

4. A display device according to one of the preceding Claims,
**characterised in that** the front face (31) of the light guide (3) is disposed flush with the opaque front face at least on the edge side in the region of the insertion opening (24).

5. A display device according to one of the preceding Claims,
**characterised in that** the lateral faces (32, 34) of the light guide (3) are not affected by an opaque colour application.

## Revendications

1. Dispositif d'affichage, en particulier disposé dans le panneau avant d'un appareil de commande (1) d'un véhicule automobile, comportant un conducteur de lumière (3) en forme de barre insérée dans une ouverture d'insertion (24) correspondante d'une face avant (21), par ailleurs opaque, d'un bouton de commande (2), dans lequel des faces latérales (32, 34) du conducteur de lumière, qui sont entourées par l'ouverture d'insertion (24) et adjacentes à une face frontale (31), sont disposées à angle aigu par rapport à la face frontale (31), dans lequel les ouvertures de l'angle aigu sont dirigées l'une sur l'autre, en vue de fournir une sortie latérale de lumière déviée de la surface frontale (31), et dans lequel le conducteur de lumière (3) fait saillie, par une âme (33) de réception de lumière, dans la zone intérieure de l'appareil de commande (1), qui est munie d'au moins une source de lumière,
**caractérisé** en ce que le conducteur de lumière (3) présente une face frontale (31) recourbée correspondant à la face avant (21) du bouton et en ce que les faces latérales étroites (34) adjacentes à la face frontale (31) reposent sur des épaulements correspondants dans l'ouverture d'insertion (24).

2. Dispositif d'affichage selon la revendication 1,
**caractérisé** en ce que les épaulements renferment par l'arrière les faces latérales (34) du conducteur de lumière (3).

3. Dispositif d'affichage selon la revendication 1 ou 2,
**caractérisé** en ce que la face frontale (31) du conducteur de lumière (3) est munie d'un revêtement coloré translucide, appliqué en particulier par pressage à chaud.

4. Dispositif d'affichage selon l'une quelconque des revendications précédentes,
**caractérisé** en ce que la face frontale (31) du conducteur de lumière (3) est, au moins du côté du bord dans la zone de l'ouverture d'insertion (24), disposée à effleurement avec la face avant opaque.

5. Dispositif d'affichage selon l'une quelconque des revendications précédentes,
**caractérisé** en ce que les faces latérales (32, 34) du conducteur de lumière (3) ne sont pas traitées en ce qui concerne un revêtement coloré translucide.
